# EUROPEAN PATENT APPLICATION

(11) **EP 3 843 363 A1**
(43) Date of publication of application: **30.06.2021**
(21) Application number: 19219227.6
(22) Date of filing: 23.12.2019
(51) Int. Cl.: H04L 29/12, H04W 92/02

(54) **SESSION MANAGEMENT FUNCTION AND METHOD OF OPERATING A SESSION MANAGEMENT FUNCTION**

(71) Applicant: NTT DoCoMo, Inc., Tokyo 100-6150 (JP)
(72) Inventor: GUERZONI, Riccardo, 80687 Munich (DE); MUTIKAINEN, Jari, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

Various embodiments provide a Session Management Function (SMF) of a mobile radio communication network. The SMF may include one or more processors configured to provide a Session Management Function (SMF), to receive a service request message from a service consumer, the service request message comprising a User Plane (UP) packet and an information allowing the determination of an interface that provides connectivity with a network the UP packet should be sent to, to determine a User Plane Function (UPF) and the interface associated with a network the UP packet should be sent to using the information of the service request message, and to generate a forwarding message comprising the UP packet to be sent to the determined UPF and the interface.

## Description

### Technical Field

Various embodiments relate generally to a Session Management Function (SMF) and a method of operating a Session Management Function (SMF).

### Background

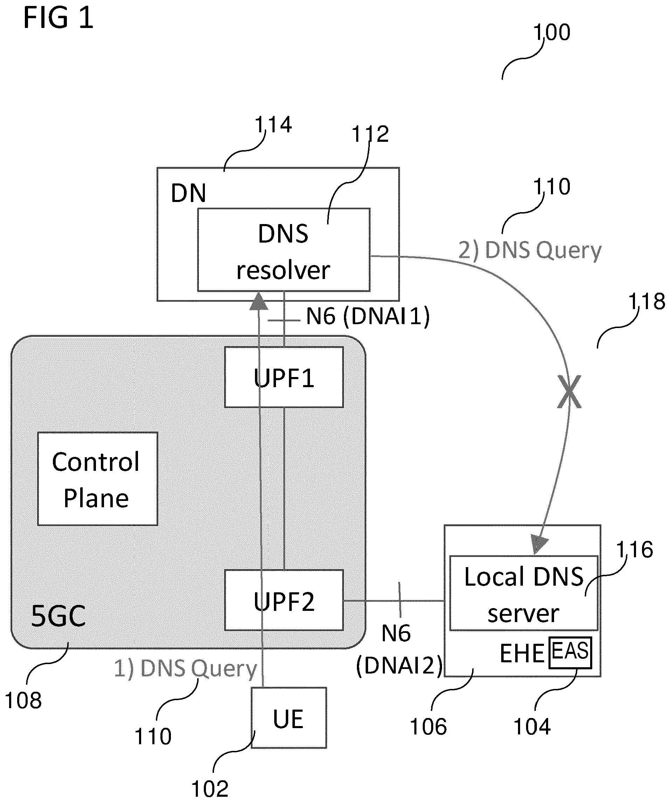

It is presently investigated how a 5G Core Network (5GC) can support Domain Name System (DNS) queries for Edge applications. One possible scenario is depicted in FIG. 1.

FIG. 1 shows a portion of a conventional communications system 100. A UE (User Equipment) 102 needs to start communicating with an Edge Application Server (EAS) 104 located in an Edge Hosting Environment (EHE) 106 outside a 5G mobile radio communication core network 108. To do this, UE 102 would need to send a DNS Query message 110 to resolve the Fully Qualified Domain Name (FQDN) of the EAS 104 to a specific EAS IP address.

The DNS Query message is transmitted to a centralized DNS resolver 112 (which is configured for the already established PDU session) which is located in a data network (DN) 114 outside the 5GC 108; the DNS resolver 112 needs to forward the DNS Query message 110 to a local DNS server 116 located in the Edge Hosting Environment (EHE) 106 near to the UE 102 location.

If there is no direct connectivity between the DN 114 (e.g. Internet) and the local EHE 116 the DNS resolver 112 cannot simply forward the DNS Query message 110 to the local DNS server 116. This situation is symbolized in FIG. 1 by means of a crossed arrow 118

### Summary

Various embodiments provide a Session Management Function (SMF) of a mobile radio communication network. The SMF may include one or more processors configured to provide a Session Management Function (SMF), to receive a service request message from a service consumer, the service request message including a User Plane (UP) packet and an information allowing the determination of an interface that provides connectivity with a network the UP packet should be sent to, to determine a User Plane Function (UPF) and the interface associated with a network the UP packet should be sent to using the information of the service request message, and to generate a forwarding message including the UP packet to be sent to the determined UPF and the interface.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a portion of a conventional communications system;
FIG. 2 shows an exemplary communication flow within a portion of a communications system in accordance with various embodiments;
FIG. 3 shows an exemplary communication flow within a portion of a communications system in accordance with various embodiments in more detail; and
FIG. 4 shows an exemplary communication flow within a portion of a communications system in accordance with various embodiments in more detail.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The terms "processor" or "controller" as, for example, used herein may be understood as any kind of entity that allows handling data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

It is to be noted that each component or function described herein may be implemented by one or more processors.

Various embodiments provide a solution to use e.g. the 5GC to forward e.g. a DNS Query message from a DNS resolver to a local DNS server. It is to be noted that although the detailed embodiments are described with relation to the 5GC, the embodiments are equally applicable to an Evolved Packet Core (EPC) Network in accordance with a Long Term Evolution (LTE) mobile radio communication network.

Illustratively, various embodiments provide an additional interface, e.g. implemented as a Network Exposure Function (NEF), to allow communication between for example a Centralised Application Server (CAS) and one or more Control Plane Functions of the 5GC such as the Policy Control Function (PCF) and/or the Session Management Function (SMF). Upon receipt of a respective communication request (in the following also referred to as a service request message) coming from the CAS to send a User Plane (UP) packet to annother entity such as an Application Server in another network, the SMF may determine a User Plane Function associated with an interface that is associated with the network the UP packet should be sent to using the information of the service request message.

Illustratively, the 5GC is provided as a bridge for a communication between a first entity located outside the 5GC and a second entity also located outside the 5GC, wherein the first entity and the second entity do not have a direct communication connection available outside the 5GC. The 5GC Control Plane (e.g. SMF) thus may expose an Application Programming Interface (API), e.g. accessible via an NEF, that allows the Centralized AS (e.g. acting as an Application Function, AF) to request forwarding of UP Data via 5GC to another component outside the 5GC and outside the DN, in which the CAS resides, e.g. to another Application Server (AS), e.g. to an Edge Application Server (EAS) e.g. located in another data network such as in an Edge Hosting Environment (EHE).

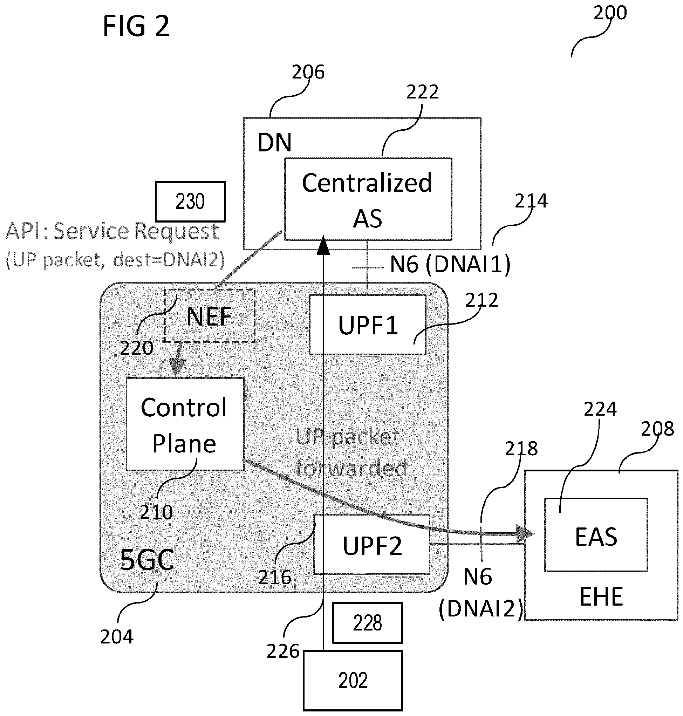

FIG. 2 shows an exemplary communication flow within a portion of a communications system 200 in accordance with various embodiments.

The portion of the communication system 200 may include a mobile radio communication terminal device, such as a user equipment (UE) 202 (in general, an arbitrary number of mobile radio communication terminal devices may be provided), a 5G Core Network (5GC) 204, a first data network DN 206, and a second data network, for example implemented in an Edge Hosting Environment (EHE) 208.

The 5GC 204 may include one or more control plane entities 210, a plurality of User Plane Functions (UPF) such as a first UPF 212 associated with a first N6 interface 214 (having for example assigned a first Data Network Access ID (DNAI)) and a second UPF 216 associated with a second N6 interface 218 (having for example assigned a second Data Network Access ID (DNAI)). Furthermore, the 5GC 204 may include an additionally provided Network Exposure Function (NEF) 220. The NEF 220 may be configured to provide interface functions to allow communication between one or more entities located in the first DN 206 such as a Centralized Application Server (CAS) 222 and one or more entities of the Control Plane 210 as will be described in more detail below.

The EHE 208 may be geographically near the UE 102 and may be associated with the second UPF 216 and the second N6 interface 218. The EHE 208 may include one or more Edge components such as one or more Edge Application Servers 224.

In the following, it is assumed that the UE 202 has already established a Protocol Data Unit (PDU) session as one example of a communication connection with the CAS 222 in the DN 206 (symbolized in FIG. 2 by means of a first arrow 226).

It is assumed that the UE 202 sends a UP packet 228 to the CAS 222 with the additional request to the CAS 222 to forward the UP packet 228 to the EAS 224. Since the CAS 222 has no direct communication connection outside the 5GC 204 to the EAS 224 available, it generates a service request message 230.

In various embodiments, the CAS 222 acts as an Application Function (AF) and may therefore include one or more processors configured to provide an AF.

The service request message 230 may include the UP packet 228 and an information allowing the determination, by a Session Management Function (SMF) of the 5GC, of an interface that provides connectivity with a network the UP packet should be sent to. The information of the service request message 230 may include a Data Network Access Identifier (DNAI) such as the second DNAI indicating the second N6 interface 218. As an alternative, the information of the service request message 230 may include an AF Service identifier (ID) that the NEF 220 can use to determine the DNAI of the N6 interface (e.g. the second N6 interface 218) associated with the EHE 208 the target EAS 224 resides in. As a further alternative, the information of the service request message 230 may include an indication that the UP packet 228 should be sent to a UPF and the interface, the associated network of which fulfills a predefined location criterion with respect to a location of an associated communication terminal device. Thus, an alternative option for the destination information is illustratively: instead of providing the DNAI or the AF-Service-Identifier as destination information in the UP packet 228, the AF may provide an indication to the SMF 302 to forward the UP packet 228 to the EHE 208 closer or closest to the UE 102 location. The SMF 302 may determine the DNAI based on the UE 102 location.

Moreover, the UP packet 228 may include a source Internet Protocol (IP) address as well as a destination IP address, and the payload, in other words, the user data provided by the UE 202.

The CAS 222 transmits the generated service request message 230 to the 5GC 204, for example to the NEF 220, and via the NEF 220, to one or more entities of the CP 210. The NEF 220 and/or the one or more entities in the CP 210 are configured to determine the destination address of the UP packet 228, for example the address of the second UPF 216 and the associated second N6 interface 218 to allow a forwarding of the UP packet 228 from the entity of the CP 210 to the EAS 224 located in the EHE 208. Upon receipt of the service request message 230 from the NEF 220, the responsible entity of the CP 210 will determine the destination information included in the service request message 230, will determine the associated UPF, for example the second UPF 216, and instructs the second UPF 216 to forward the UP packet 228 to the entity associated with the destination IP address included in the UP packet 228, for example to the EAS 224.

Thus, a bridge is provided for communication of UP packets within an already established PDU session between two application servers, for example a CAS and an EAS.

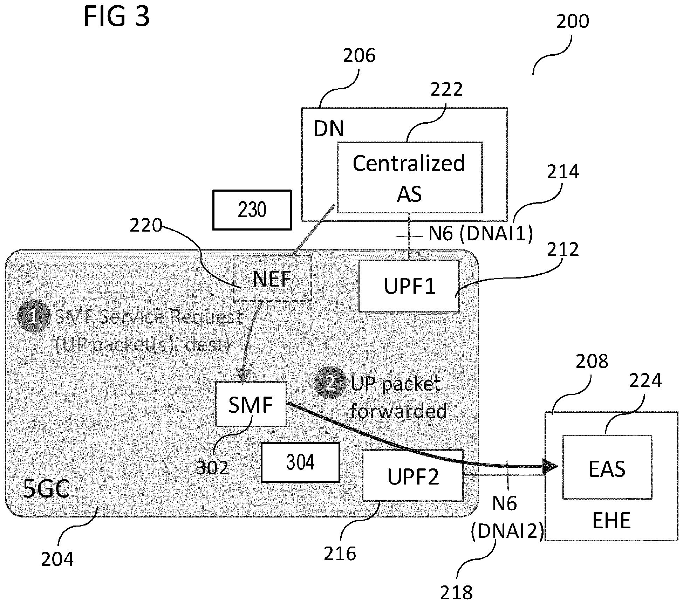

FIG. 3 shows an exemplary communication flow within a portion of the communications system 200 in accordance with various embodiments in more detail.

In this implementation, a session management function (SMF) 302 is provided as one exemplary entity of the CP 210 which determines the UPF (for example the second UPF 216) associated with the interface (for example the second N6 interface) to a data network in which the destination entity, for example the EAS 224 resides, and which forwards the UP packet 228 included in the service request message 230 to the determined UPF instructing the determined UPF to transmit the UP packet 228 to the destination address included in the UP packet 228, for example to the EAS 224.

The SMF 302 is thus configured to provide session management functions. Furthermore, the SMF 302 receives the service request message 230 from a service consumer (e.g. a service consumer entity), for example the CAS 222, via the NEF 220, determines a User Plane Function (UPF) and the interface associated with a network the UP packet 228 should be sent to using the information of the service request message, as described above, and forwards the UP packet 228 to the determined UPF, for example by generating a forwarding message 304 which includes the UP packet 228 to be sent to the determined UPF and the interface and transmits the same to the determined UPF, for example the second UPF 216.

Illustratively, in this implementation, the SMF 302 provides an additional service to deliver data (for example UP data) to an N6 interface. In this context, a service consumer, for example the CAS 222, acting as an AF, sends the service request message 230 as a service request to the SMF 302, the service request message 230 including the UP packet 228 (optionally a plurality of UP packets 228) to be delivered to an EHE 208, and a destination information that uniquely identifies the EHE 208. The SMF 302 sends the UP packet 228, for example in the forwarding message 304, to the second UPF 216 that provides connectivity to the second N6 interface 218 corresponding to the destination information included in the service request message 230. Furthermore, the SMF 302 instructs the second UPF 216 to forward the UP packet(s) 228 to the destination address, for example the destination IP address included in the UP packet(s) 228.

It is to be noted that the SMF 302 can parse the UP packet(s) 228 to determine the source IP address and instruct the second UPF 216 to send possible response packets to the SMF. This is valid for all described embodiments.

In various embodiments, the handling of a response to a UP packet 228 may be implemented as follows:
- the AF, for example the CAS 222, also indicates a callback Uniform Resource Identifier (URI) for notifications on the responses;
- the SMF 302 instructs the UPF, for example the second UPF 216, to send a possible response message to the UP packet 228 to the SMF 302;
- if the UPF, for example the second UPF 216, reports a response (in other words, sends a response message) to the SMF 302, the SMF 302 will forward the response message to the NEF 220 and, via the NEF 220, to the AF, for example the CAS 222.

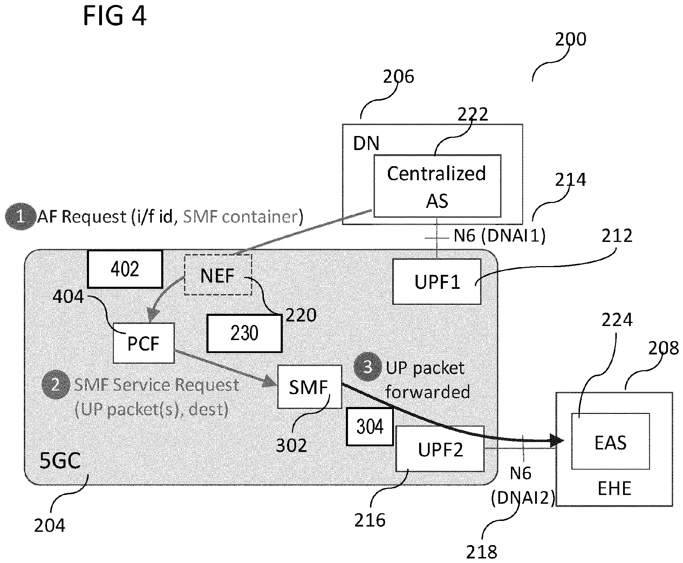

FIG. 4 shows an exemplary communication flow within a portion of the communications system 200 in accordance with various embodiments in more detail.

In the implementation shown in FIG. 4, the AF, for example the CAS 222 may send an AF request message 402 to the Policy Control Function (PCF) 404 by including an additional SMF Container which includes the one or more UP packets 228. The PCF 404 may invoke the additional SMF service as described with reference to FIG. 3. The interface identifier indicated by the AF 222 in the AF request message 402 can be a DNAI or an AF-Service-ID (like in TS 23.502 clause 5.6.7) and can be used as destination identifier in the service request message 230 to the SMF 302. In this implementation, the PCF 404 and the SMF 302 are exemplary entities of the CP 210.

In various embodiments, a 5GC SMF exposes a service API to enable service consumers to request forwarding of UP packets via 5GC Control Plane to a DN interface. The service request may include or essentially consist of the UP packet(s) and a DN interface information. As a consequence of a service request, the SMF may select a UPF according to the DN interface information, may send the packet(s) to a UPF and may instruct the UPF to forward the packet(s) to the destination IP address of the packet(s).

In embodiments where two 5GS SMF are used, e.g. an Intermediate SMF and an Anchoring SMF, the SMF that receives the service request may foward it to other SMF.

In the following, various aspects of this disclosure will be illustrated:
Example 1 is a Session Management Function (SMF) of a mobile radio communication network. The SMF may include one or more processors configured to: provide a Session Management Function (SMF), to receive a service request message from a service consumer, the service request message including a User Plane (UP) packet and an information allowing the determination of an interface that provides connectivity with a network the UP packet should be sent to, to determine a User Plane Function (UPF) and the interface associated with a network the UP packet should be sent to using the information of the service request message, and to generate a forwarding message including the UP packet to be sent to the determined UPF and the interface.
In Example 2, the subject matter of Example 1 can optionally include that the service consumer is an Application Function.
In Example 3, the subject matter of any one of Examples 1 or 2 can optionally include that the service consumer includes a Network Exposure Function (NEF) that is configured to send the service request message in response to a receipt of a previous service request message from a service consumer.
In Example 4, the subject matter of any one of Examples 1 or 2 can optionally include that the service consumer is a Policy Control Function (PCF) configured to send the service request message in response to a receipt of a previous service request message from an AF. In an alternative, the service consumer is a Policy Control Function (PCF) configured to send the service request message in response to a receipt of a previous service request message from an NEF.
In Example 5, the subject matter of any one of Examples 1 to 4 can optionally include that the information of the service request message includes a Data Network Access Identifier (DNAI).
In Example 6, the subject matter of any one of Examples 1 to 4 can optionally include that the information of the service request message includes an AF Service identifier (ID).
In Example 7, the subject matter of any one of Examples 1 to 4 can optionally include that the information of the service request message includes an indication that the UP packet should be sent to a UPF and the interface, the associated network of which fulfills a predefined location criterion with respect to a location of an associated communication terminal device.
In Example 8, the subject matter of any one of Examples 1 to 7 can optionally include that the UP packet further includes a source address and a destination address of the UP packet.
In Example 9, the subject matter of any one of Examples 1 to 8 can optionally include that the network includes an Edge Hosting Environment including an Edge Application Server.
In Example 10, the subject matter of any one of Examples 1 to 9 can optionally include that the forwarding message includes an instruction to the UPF to forward the UP packet to the destination address of the UP packet.
In Example 11, the subject matter of any one of Examples 1 to 10 can optionally include that the network is a data network.
In Example 12, the subject matter of any one of Examples 1 to 11 can optionally include that the mobile radio communication network is a 5G Core Network.
In Example 13, the subject matter of any one of Examples 1 to 12 can optionally include that the mobile radio communication network is a Control Plane 5G Core Network.
In Example 14, the subject matter of any one of Examples 1 to 13 can optionally include that the service request message includes a callback address to be used for notifications on a response to the UP packet.
In Example 15, the subject matter of any one of Examples 1 to 14 can optionally include that the one or more processors are configured to receive a response message to the UP packet, and to forward the response message to the service consumer, e.g. the AF.
In Example 16, the subject matter of any one of Examples 1 to 15 can optionally include that the service consumer includes a centralized Domain Name System (DNS) resolver.
In Example 17, the subject matter of any one of Examples 1 to 16 can optionally include that the interface is an N6 interface.
Example 18 is an Application Function (AF) of a mobile radio communication network. The AF may include one or more processors configured to provide an Application Function (AF), to receive a User Plane (UP) packet to be forwarded to a network which is extern to the network the AF resides in, to generate a service request message including the User Plane (UP) packet and an information allowing the determination, by a Session Management Function (SMF), of an interface that provides connectivity with a network the UP packet should be sent to, and to send the service request message to the SMF.
In Example 19, the subject matter of Example 18 can optionally include that the AF is further configured to send the service request message to the SMF via a Network Exposure Function (NEF).
In Example 20, the subject matter of any one of Examples 18 or 19 can optionally include that the AF is further configured to send the service request message to the SMF via a Policy Control Function (PCF).
In Example 21, the subject matter of any one of Examples 18 to 20 can optionally include that the information of the service request message includes a Data Network Access Identifier (DNAI).
In Example 22, the subject matter of any one of Examples 18 to 21 can optionally include that the information of the service request message includes an AF Service identifier (ID).
In Example 23, the subject matter of any one of Examples 18 to 21 can optionally include that the information of the service request message includes an indication that the UP packet should be sent to a UPF and the interface, the associated network of which fulfills a predefined location criterion with respect to a location of an associated communication terminal device.
In Example 24, the subject matter of any one of Examples 18 to 23 can optionally include that the UP packet further includes a source address and a destination address of the UP packet.
In Example 25, the subject matter of any one of Examples 18 to 24 can optionally include that the network includes an Edge Hosting Environment including an Edge Application Server.
In Example 26, the subject matter of any one of Examples 18 to 25 can optionally include that the network is a data network.
In Example 27, the subject matter of any one of Examples 18 to 26 can optionally include that the mobile radio communication network is a 5G Core Network.
In Example 28, the subject matter of Example 27 can optionally include that the mobile radio communication network is a Control Plane 5G Core Network.
In Example 29, the subject matter of any one of Examples 18 to 28 can optionally include that the service request message includes a callback address to be used for notifications on a response to the UP packet.
In Example 30, the subject matter of any one of Examples 18 to 29 can optionally include that the one or more processors are configured to receive a response message to the UP packet.
In Example 31, the subject matter of any one of Examples 18 to 30 can optionally include that the includes a centralized Domain Name System (DNS) resolver.
In Example 32, the subject matter of any one of Examples 18 to 31 can optionally include that the interface is an N6 interface.
Example 33 is a method of operating a Session Management Function (SMF) of a mobile radio communication network. The method may include providing a Session Management Function (SMF), receiving a service request message from a service consumer, the service request message including a User Plane (UP) packet and an information allowing the determination of an interface that provides connectivity with a network the UP packet should be sent to, determining a User Plane Function (UPF) and the interface associated with a network the UP packet should be sent to using the information of the service request message, and generating a forwarding message including the UP packet to be sent to the determined UPF and the interface.
In Example 34, the subject matter of Example 33 can optionally include that the service consumer is an Application Function.
In Example 35, the subject matter of any one of Examples 33 or 34 can optionally include that the service consumer includes a Network Exposure Function (NEF) sending the service request message in response to a receipt of a previous service request message from a service consumer.
In Example 36, the subject matter of any one of Examples 33 or 34 can optionally include that the service consumer is a Policy Control Function (PCF) configured to send the service request message in response to a receipt of a previous service request message from an AF. In an alternative, the service consumer is a Policy Control Function (PCF) configured to send the service request message in response to a receipt of a previous service request message from an NEF.
In Example 37, the subject matter of any one of Examples 33 to 36 can optionally include that the information of the service request message includes a Data Network Access Identifier (DNAI).
In Example 38, the subject matter of any one of Examples 33 to 37 can optionally include that the information of the service request message includes an AF Service identifier (ID).
In Example 39, the subject matter of any one of Examples 33 to 38 can optionally include that the information of the service request message includes an indication that the UP packet should be sent to a UPF and the interface, the associated network of which fulfills a predefined location criterion with respect to a location of an associated communication terminal device.
In Example 40, the subject matter of any one of Examples 33 to 39 can optionally include that the UP packet further includes a source address and a destination address of the UP packet.
In Example 41, the subject matter of any one of Examples 33 to 40 can optionally include that the network includes an Edge Hosting Environment including an Edge Application Server.
In Example 42, the subject matter of any one of Examples 33 to 41 can optionally include that the forwarding message includes an instruction to the UPF to forward the UP packet to the destination address of the UP packet.
In Example 43, the subject matter of any one of Examples 33 to 42 can optionally include that the network is a data network.
In Example 44, the subject matter of any one of Examples 33 to 43 can optionally include that the mobile radio communication network is a 5G Core Network.
In Example 45, the subject matter of any one of Examples 33 to 46 can optionally include that the mobile radio communication network is a Control Plane 5G Core Network.
In Example 46, the subject matter of any one of Examples 33 to 45 can optionally include that the service request message includes a callback address to be used for notifications on a response to the UP packet.
In Example 47, the subject matter of any one of Examples 33 to 46 can optionally include that the method further includes receiving a response message to the UP packet, and forwarding the response message to the service consumer, e.g. the AF.
In Example 48, the subject matter of any one of Examples 33 to 47 can optionally include that the service consumer includes a centralized Domain Name System (DNS) resolver.
In Example 49, the subject matter of any one of Examples 33 to 48 can optionally include that the interface is an N6 interface.
Example 50 is a method of operating an Application Function (AF) of a mobile radio communication network. The method may include providing an Application Function (AF), receiving a User Plane (UP) packet to be forwarded to a network which is extern to the network the AF resides in, generating a service request message including the User Plane (UP) packet and an information allowing the determination, by a Session Management Function (SMF), of an interface that provides connectivity with a network the UP packet should be sent to, and sending the service request message to the SMF.
In Example 51, the subject matter of Example 50 can optionally include that the method further includes sending the service request message to the SMF via a Network Exposure Function (NEF).
In Example 52, the subject matter of any one of Examples 50 or 51 can optionally include that the method further includes sending the service request message to the SMF via a Policy Control Function (PCF).
In Example 53, the subject matter of any one of Examples 50 to 52 can optionally include that the information of the service request message includes a Data Network Access Identifier (DNAI).
In Example 54, the subject matter of any one of Examples 50 to 53 can optionally include that the information of the service request message includes an AF Service identifier (ID).
In Example 55, the subject matter of any one of Examples 50 to 54 can optionally include that the information of the service request message includes an indication that the UP packet should be sent to a UPF and the interface, the associated network of which fulfills a predefined location criterion with respect to a location of an associated communication terminal device.
In Example 56, the subject matter of any one of Examples 50 to 55 can optionally include that the UP packet further includes a source address and a destination address of the UP packet.
In Example 57, the subject matter of any one of Examples 50 to 56 can optionally include that the network includes an Edge Hosting Environment including an Edge Application Server.
In Example 58, the subject matter of any one of Examples 50 to 57 can optionally include that the network is a data network.
In Example 59, the subject matter of any one of Examples 50 to 58 can optionally include that the mobile radio communication network is a 5G Core Network.
In Example 60, the subject matter of Example 59 can optionally include that the mobile radio communication network is a Control Plane 5G Core Network.
In Example 61, the subject matter of any one of Examples 50 to 60 can optionally include that the service request message includes a callback address to be used for notifications on a response to the UP packet.
In Example 62, the subject matter of any one of Examples 50 to 61 can optionally include that the one or more processors are configured to receive a response message to the UP packet.
In Example 63, the subject matter of any one of Examples 50 to 62 can optionally include that the includes a centralized Domain Name System (DNS) resolver.
In Example 64, the subject matter of any one of Examples 50 to 63 can optionally include that the interface is an N6 interface.
Example 65 is a non-transient computer-readable storage medium storing instruction, when executed by a processor, implementing a method of operating a Session Management Function of a mobile radio communication network of any one of Examples 33 to 49.
Example 66 is a non-transient computer-readable storage medium storing instruction, when executed by a processor, implementing a method of operating an Application Function of a mobile radio communication network of any one of Examples 50 to 64.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A Session Management Function (SMF) of a mobile radio communication network, comprising one or more processors configured to:
provide a Session Management Function (SMF);
receive a service request message from a service consumer, the service request message comprising a User Plane (UP) packet and an information allowing the determination of an interface that provides connectivity with a network the UP packet should be sent to;
determine a User Plane Function (UPF) and the interface associated with a network the UP packet should be sent to using the information of the service request message; and
generate a forwarding message comprising the UP packet to be sent to the determined UPF and the interface.

2. The SMF of claim 1,
wherein the service consumer is an Application Function.

3. The SMF of any one of claims 1 or 2,
wherein the service consumer comprises a Network Exposure Function (NEF) that is configured to send the service request message in response to a receipt of a previous service request message from an AF; or
wherein the service consumer is a Policy Control Function (PCF) configured to send the service request message in response to a receipt of a previous service request message from an AF; or
wherein the service consumer is a Policy Control Function (PCF) configured to send the service request message in response to a receipt of a previous service request message from an NEF.

4. The SMF of any one of claims 1 to 3,
wherein the information of the service request message comprises a Data Network Access Identifier (DNAI); or
wherein the information of the service request message comprises an AF Service identifier (ID).

5. The SMF of any one of claims 1 to 4,
wherein the information of the service request message comprises an indication that the UP packet should be sent to a UPF and the interface, the associated network of which fulfills a predefined location criterion with respect to a location of an associated communication terminal device.

6. The SMF of any one of claims 1 to 5,
wherein the UP packet further comprises a source address and a destination address of the UP packet.

7. The SMF of any one of claims 1 to 6,
wherein the network comprises an Edge Hosting Environment comprising an Edge Application Server..

8. The SMF of any one of claims 1 to 7,
wherein the forwarding message comprises an instruction to the UPF to forward the UP packet to the destination address of the UP packet.

9. The SMF of any one of claims 1 to 8,
wherein the network is a data network.

10. The SMF of any one of claims 1 to 9,
wherein the mobile radio communication network is a 5G Core Network;
wherein preferably the mobile radio communication network is a Control Plane 5G Core Network.

11. The SMF of any one of claims 1 to 10,
wherein the service request message comprises a callback address to be used for notifications on a response to the UP packet.

12. The SMF of any one of claims 1 to 11,
wherein the one or more processors are configured to:
receive a response message to the UP packet; and
forward the response message to the service consumer.

13. The SMF of any one of claims 1 to 12,
wherein the service consumer comprises a centralized Domain Name System (DNS) resolver.

14. The SMF of any one of claims 1 to 13,
wherein the interface is an N6 interface.

15. An Application Function (AF) of a mobile radio communication network, comprising one or more processors configured to:
provide an Application Function (AF);
receive a User Plane (UP) packet to be forwarded to a network which is extern to the network the AF resides in;
generate a service request message comprising the User Plane (UP) packet and an information allowing the determination, by a Session Management Function (SMF), of an interface that provides connectivity with a network the UP packet should be sent to; and
send the service request message to the SMF.

## Amended claims

### Amended claims in accordance with Rule 137(2) EPC.

1. A Session Management Function, SMF, (302) of a mobile radio communication network (204), comprising one or more processors, the SMF (302) configured to:
- receive a service request message (230) from a service consumer entity (222), the service request message (230) comprising a User Plane, UP, packet (228) and an information allowing the determination of an interface (218) that provides connectivity with a further network (208) the UP packet (228) should be sent to;
- determine a User Plane Function, UPF, (216) and the interface (218) associated with the further network (208) the UP packet (228) should be sent to using the information of the service request message (230); and
- generate a forwarding message (304) comprising the UP packet (228) to be sent to the determined UPF (216) and the determined interface (218);
wherein the further network (208) comprises an Edge Hosting Environment, EHE, (208) comprising an Edge Application Server, EAS, (224); and
wherein the service consumer entity (222) and the Edge Hosting Environment (208) lack a direct connectivity between each other outside the mobile radio communication network (204).

2. The SMF (302) of claim 1, wherein the SMF (302) is further configured to receive the service request message (230) from the service consumer entity (222) being an Application Function, AF, (222).

3. The SMF (302) of claim 2,
wherein the SMF (302) is further configured to receive the service request message (230) from the AF through a Network Exposure Function, NEF, (220),
wherein the mobile radio communication network (204) comprises the NEF (220) that is configured to forward the service request message (230) to the SMF (302) in response to a receipt of the service request message (230) from the AF (222); or
wherein the SMF (302) is further configured to receive the service request message (230) from the AF through a Policy Control Function, PCF, (404),
wherein the mobile radio communication network (204) comprises the PCF (404) configured to forward the service request message (230) to the SMF (302) in response to a receipt of the service request message (230) from the AF (222); or
wherein the SMF (302) is further configured to receive the service request message (230) from the AF through a Network Exposure Function, NEF, (220) and a Policy Control Function, PCF, (404),
wherein the mobile radio communication network (204) comprises the Network Exposure Function, NEF, (220) that is configured to forward the service request message (230) in response to a receipt of the service request message (230) from the AF (222), and wherein the mobile radio communication network (204) further comprises the PCF (404) configured to forward the service request message (230) to the SMF (302) in response to a receipt of the service request message (230) from the NEF (220).

4. The SMF (302) of any one of claims 1 to 3,
wherein the SMF (302) is further configured to use the information of the service request message (230), wherein the information of the service request message (230) comprises a Data Network Access Identifier, DNAI.

5. The SMF (302) of claim 2 or 3, wherein the SMF (302) is further configured to use the information of the service request message (230), wherein the information of the service request message (230) comprises an AF Service identifier, ID.

6. The SMF (302) of any one of claims 1 to 5,
wherein the SMF (302) is further configured to use the information of the service request message (230), wherein the information of the service request message (230) comprises an indication that the UP packet (228) should be sent to the determined UPF (216) and the determined interface (218), the associated network of which fulfills a predefined location criterion with respect to a location of an associated communication terminal device.

7. The SMF (302) of any one of claims 1 to 6, wherein the SMF (302) is further configured to receive the service request message (230) from the service consumer entity (222), the service request message (230) comprising a User Plane, UP, packet (228);
wherein the UP packet (228) further comprises a source address and a destination address of the UP packet (228).

8. The SMF (302) of any one of claims 1 to 7, wherein the SMF (302) is further configured to generate a forwarding message (304),
wherein the generated forwarding message (304) comprises an instruction to the determined UPF (216) to forward the UP packet (228) to the destination address of the UP packet (228).

9. The SMF (302) of any one of claims 1 to 8,
wherein the SMF (302) is further configured to receive the service request message (230) from the service consumer entity (222),
wherein the service consumer entity (222) is in a data network, DN, (206).

10. The SMF (302) of any one of claims 1 to 9, wherein the SMF (302) is configured to be located in a radio communication network being a 5G Core Network;
wherein preferably the mobile radio communication network (204) is a Control Plane 5G Core Network.

11. The SMF (302) of any one of claims 1 to 10, wherein the SMF (302) is further configured receive the service request message (230) from the service consumer entity (222), wherein the service request message (230) comprises a callback address to be used for notifications on a response to the UP packet (228).

12. The SMF (302) of any one of claims 1 to 11,
wherein the SMF (302) is further configured to:
receive a response message to the UP packet (228); and
forward the response message to the service consumer entity (222).

13. The SMF (302) of any one of claims 1 to 12, wherein the SMF (302) is further configured to receive the service request message (230) from the service consumer entity (222), wherein the service consumer entity (222) is located in a network (206) comprising a centralized Domain Name System, DNS, resolver (112).

14. The SMF (302) of any one of claims 1 to 13,
wherein the SMF (302) is configured to determine the interface (218) being an N6 interface.

15. An Application Function, AF, (222) for being connected to a mobile radio communication network (204), comprising one or more processors, the AF (222) configured to:
- receive a User Plane, UP, packet (228) to be forwarded to a further network (208) which is extern to the mobile radio communication network (204);
- generate a service request message (230) comprising the UP packet (228) and an information allowing the determination, by a Session Management Function, SMF, (302) comprised by the mobile radio communication network (204), of an interface (218) comprised by the mobile radio communication network (204), that provides connectivity with the further network (208) the UP packet (228) should be sent to; and
- send the service request message (230) to the SMF (302);
wherein the further network (208) comprises an Edge Hosting Environment, EHE, (208) comprising an Edge Application Server; EAS, (224); and
wherein the AF (222) and the EHE (208) lack a direct connectivity between each other outside the mobile radio communication network (204).
